**Europäisches Patentamt**

**European Patent Office**

**Office européen des brevets**

(19)

(11) Veröffentlichungsnummer : **0 508 932 A1**

(12) # EUROPÄISCHE PATENTANMELDUNG

(21) Anmeldenummer : **92600002.7**

(22) Anmeldetag : **01.04.92**

(51) Int. Cl.[5] : **B66D 3/10,** B66D 5/16, F16G 11/10

(30) Priorität : **10.04.91 GR 91010152**

(43) Veröffentlichungstag der Anmeldung : **14.10.92 Patentblatt 92/42**

(84) Benannte Vertragsstaaten : **AT BE DE DK ES FR GB IT NL PT SE**

(71) Anmelder : **Dellios, Anastasios of Andreas Al. Papanastasiou 29, A. Kallithea GR-566 25 Thessaloniki, Sykies (GR)**

(72) Erfinder : **Dellios, Anastasios of Andreas Al. Papanastasiou 29, A. Kallithea GR-566 25 Thessaloniki, Sykies (GR)**

(54) **Automatische mechanische Vorrichtung zur Abbremsung bzw. Befreiung der Seile oder Schnuere Zwecks das Hinauf- oder Herabziehens von Lasten.**

(57) Diese Vorrichtung besteht aus nur zwei Teilen, dem Gehäuse (1), das einen eingebauten Drehpunkt (8,3), und einen eingebauten Stopper (7) (Platte) hat, und aus einer gebogenen Bremsplatte (4) mit eingebautem oder zusätzlichem Befestigungsstift. Der Drehpunkt kann fest oder beweglich oder rotierend sein, kann zylindrischer oder beliebiger Form sein, und kann Zacken oder Rillen oder Überzug tragen. Die Bremsklappe (4) bildet, bezogen auf den Drehpunkt, einen positiven oder negativen Bogen, oder weist einen spitzen oder stumpfen Winkel auf, oder sie ist gerade und erweitert ihre Zacken in eine oder mehrere horizontale oder vertikale Reihen. Die Zacken der Bremsklappe sind rhombischer oder anderer Form und liegen in symmetrischen oder versetzten Reihen. Sie erlauben die Abbremsung der Last am gewünschten Punkt ohne "Spiel" (Toleranz) und ebenso die automatische Abbremsung der Seile (2) oder Schnüre und der hinauf- oder herabziehenden Last im Falle eines Schnurrisses oder einer Unachtsamkeit.

Die Vorrichtung kann einfach mit einem leichten Einrasten befestigt werden, ohne daß Schrauben oder Befestigungsstifte benötigt werden.

EP 0 508 932 A1

Seitenansicht

2, 1, 6-4, 3, 7, 7, 7A, 8, 2, 5-4, 4, 1, Entwurf 8

Die Erfindung bezieht sich auf eine Bremsvorrichtung,die aus nur zwei Teilen besteht, aus dem Hauptteil mit eingebautem Dreh punkt und der gezackten Klappe (gebogenen oder geraden mit ein gebautem oder zusaetzlichem Befestigungsstift) und findet Anwendung beim Hinauf- oder Herabziehen von Lasten.

Es existieren auch andere Vorrichtungen solcher Art, die aber wichtige Nachteile aufweisen, sowohl was die Art and Kosten der Produktion betrifft, als auch und vorwiegend was ihre Funktion betrifft. Von den schon bekann Mechanismen dieser Art, der eine besteht aus insgesamt sechs Teilen, d.h. aus einem metallischen II - foermigen Teil, aus einer Metallklappe, aus drei Befestigungsstiften verschiedenes Durchmessers und aus einem Zahnrad. Zusaetzlich werden zwei Schrauben oder Befestigungsstifte benoetigt, damit die Vorrichtung befestigt werden und funktionieren kann. Jedoch der wichtigste Nachteil ist, daß die Klappe ein spitziges Ende hat, das in Beruehrung mit den Seilen oder Schnueren kommt, damit diese am Zahnrad eingeklemmt werden. Das fuehrt dahin, daß die Seile oder Schnuere in einem kleinen Zeitraum einen solchen Verschleiß haben, daß die am Ende reißen.

Der andere Mechanismus besteht ebenfalls aus vielen Teilen, aus insgesamt fuenf (einem Metall- oder Plastikteil, zwei Befestigungsstifen verschiedenes Durchmessers, einem Zahnrad und einem glatten Rad. Zusaetzlich werden zwei Schrauben fuer die Befestigung der Vorrichtung benoetigt.

Diese beiden existierenden Vorrichtungen, außer den obengenannten Nachteilen, gewaehren keine optimale Abbremsung am gewuenschten Punkt, die haben also ein "Spiel" (Toleranz) und sind nicht zuverlaessig, sodaß im Fall eines Seil- oder Schnur rißes oder im Fall einer Unachtsamkeit des Benutzers, die hinauf- oder herabziehnde Last kraeftig nach unten prallt, was die Gefahr eines Unfalls erhoeht.

Es wird also eine Bremsvorrichtung notwendig, die diese Probleme abschafft, d.h. eine Vorrichtung, die nicht aus vielen Teilen besteht, die Siecherheit gewaehrt, die am gewuenschten Punkt abbremst, und die mit einem leichtem Druecken (Einrasten befestigt werden kann, ohne daß man Schrauben ober Befestigungsstifte benoetigt.

Die gegenwaertige Erfindung ist ein solcher Mechanismus, der alle diese Vorteile hat. Er besteht nur aus zwei Teilen: a) aus dem Hauptteil - Gehaeuse (Nr.1 in den Entwuerfen), das beim Querschnitt die Form eines umgekehrten II hat. Seine zwei parallele Seiten sind beliebiger Groeße und dazwischen befindet sich der eingebaute Drehpunkt (fest oder beweglich oder rotierend, zylindrischer oder beliebiger geometrischer Form und kann Zacken oder Rillen oder Ueberzug tragen, Nr.8 bei Entwurf 7), und der Stopper. Das ist eine Platte beliebiger Groeße oder geometrischer Form, und b) aus einer gebogenen gezackten Brems klappe mit eingebautem oder zusaetzlichem Befestigungsstift (Entwurf Nr.4). Die Bremsklappe kann einen positiven oder negativen Bogen in Bezug auf den Drehpunkt bilden (kann also konkav oder konvex in Bezug auf den Drehpunkt sein) oder einen spitzen oder stumpfen Winkel bilden, oder sie kann gerade sein und ihren gezackten Bereich in eine oder mehrere horizontale oder vertikale Reihen erweitern. Die Zacken der Klappe koennen eine rhombische oder andere geometrische Form haben und koennen symmetrische Reihen bilden oder versetzt liegen. Das Teil mit den Zacken kann auch zuzaetzlich eingebaut werden. Diese gezackte Klappe ist auch der wichtigste Vorteil dieser Erfindung. Sie berhut auf das Prinzip, daß sie mitgerissen wird und bremst sofort am gewuenschten Punkt. Wenn jedoch aus irgendeinem Grund die Seile oder Schnuere reißen, oder wenn der Benutzer die Kontrolle ueber sie verliert, die Zacken der Klappe dringen sofort in die Seile oder Schnuere tief ein. Das geschieht, weil die Zacken der Klappe die Schnuere oder Seile nicht nur einfach beruehren, wie es bei den heute existierenden Vorrichtungen der Fall ist, sondern sie druecken diese fest an den Drehpunkt und bremsen das System automatisch. Dabei kann die Geschwindigkeit, mit der die Last herabgezogen wird, beliebig groß sein. Gleichzeitig erlaubt diese Klappe das freie Hinauf- und Herabziehen der Last, wie in der Funktionsbeschreibung beschrieben wird.

Eine Anwendungsart dieser Erfindung wird hier mit Hilfe von Entwuerfen beschrieben, die ihre Realisierung erklaeren:

Bei Entwurf Nr. 1 ist eine Hauptansicht - Vorderansicht, wobei (1) die parallelen Nebenseiten der Vorrichtung sind, (2) die Schnur, (3) der Drehpunkt, (4) die Klappe und (5) die Vertiefung des Drehpunktes (entspricht dem Punkt Nr. 9 bei Entwurf Nr. 7).

Der Entwurf Nr. 2 ist eine Ansicht, gesehen von der Hinterseite des Entwurfs Nr. 1.

Der Entwurf Nr. 3 zeigt die Draufsicht, wobei (1) das Hauptteil (Gehaeuse) mit dem eingebauten Drehpunkt ist (3), (2) das Seil oder die Schnur, (4) die Bremsklappe, und (4-6) der in der Klappe eingebaute Befestigungsstift, mit dem sie an das Gehaeuse befestigt wird und um den, als Achse, sie sich zwischen dem Drehpunkt und dem Stopper dreht (Nr. 5 bei Entwurf 6).

Die Entwuerfe Nr. 4 und Nr. 5 zeigen die zwei Ansichten der Bremsklappe.

Die Entwuerfe Nr. 7 und Nr. 8 zeigen, der erste den Querschnitt des Mechanismus und der zweite seine Seitenansicht.

In diesen Entwuerfen wird sichtbar, wie der Mechanismus funktioniert. Nachdem er mit einem leichten Einrasten befestigt wird, werden die Seile oder Schnuere oder Riemen (Nr. 2 beim Entwurf Nr. 1,2,7,8) zwischen dem Drehpunkt (Nr.8 bei Entwurf Nr.7 oder Nr.3 bei Entwurf Nr.8) und der Bremsklappe (Nr.4 bei Entwurf Nr.7 und Nr.8) durchgesteckt.

Die Schnur horizontal hat eine Richtung (nachdem sie den Drehpunkt umkreist), die entgegensetzt zu ihrer horizontallen Ausfuhr ist, in Bezug auf die Position der Bremsklappe. Die hinauf- oder herabziehende Last befindet sich auf der Verlaengerung der Schnur (2) des Entwurfs Nr.7, nachdem natuerlich diese ihre vertikale Richtung wieder genommen hat. Sobald wir die hinaufziehende Last wieder befreien wollen, ziehen wir an der Schnur leicht nach unten und in eine,bezogen auf die Position der Bremsklappe, entgegensetzte Richtung (Position 3 bei Entwurf Nr. 7). Die Bremsklappe befreit sich, dreht sich, mit Achse ihren eingebauten Befestigungsstift (6-4), nimmt die Position 5-4 beim Entwurf Nr.7, und beendet ihre Drehung an dem, in Gehaeuse eingebauten,Stopper (Nr.7 beim Entwurf Nr.7). Wenn wir bremsen wollen,reicht nur eine leichte Beruehrung der Bremsklappe mit der Schnur, sodaß, wegen der Form der Klappe, ihre Zacken in die Schnur eindringen und diese an den Drehpunkt festdruecken.

Der Mechsnismus bremst ebenfalls automatisch, wenn der Benutzer, aus irgendeinem Grund, die Kontrolle ueber die Schnur verliert, oder wenn diese reißt.

Es versteht sich, daß der Benutzer die Verlaengerung der Schnur (3) bei Entwurf Nr.7 benutzt. Die Bremsklappe erlaubt das freie Hinauf- oder Herabziehen mit beliebiger Geschwindigkeit, ohne daß das Bremssystem die schnelle Ausfuehrung unserer Arbeiten hindert.

Eine ebenso wichtige Neuheit ist, daß die Vorrichtung nur mit einem leichten Einrasten auf der festen Unterlage befestigt werden kann, ohne daß Schrauben oder Stifte benoetigt werden. Dies gelingt durch das Bauen einer Oeffnung in der Unterlage. Die Breite dieser Oeffnung ist gleich der Breite der Vorrichtung und ihre Laenge ist gleich der Distanz zwischen den Vertiefungen der Vorrichtung auf ihren kurzen Seiten, d.h zwischen dem Punkt 9 und 9A bei Entwurf Nr.7 (oder 7 und 7A bei Entwurf Nr.8). In die Oeffnung der Unterlage bringen wir erst die Seite mit der Vertiefung an, die sich an den Drehpunkt befindet, (Nr.9 bei Entwurf Nr.7) und dann druecken wir nach oben, sodaß das keilfoermige Teil des Gehaeuses (zwischen Punkt 9A und 9B des Entwurfs Nr.7) wegen Elastizitaet in die Oeffnung der Unterlage einrastet und sich ohne Schrauben oder Stiften befestigt.

Die Vorrichtung kann aus Plastik gebaut werden, oder aus Metall,aus Plastik und Metall, aus jedem Material, das heute existiert oder in der Zukunft existieren wird.

Das Gehaeuse der Vorrichtung kann eine beliebige geometrische Form und Groeße haben, wenn es auf das gleiche Funktions Prinzip berhut.

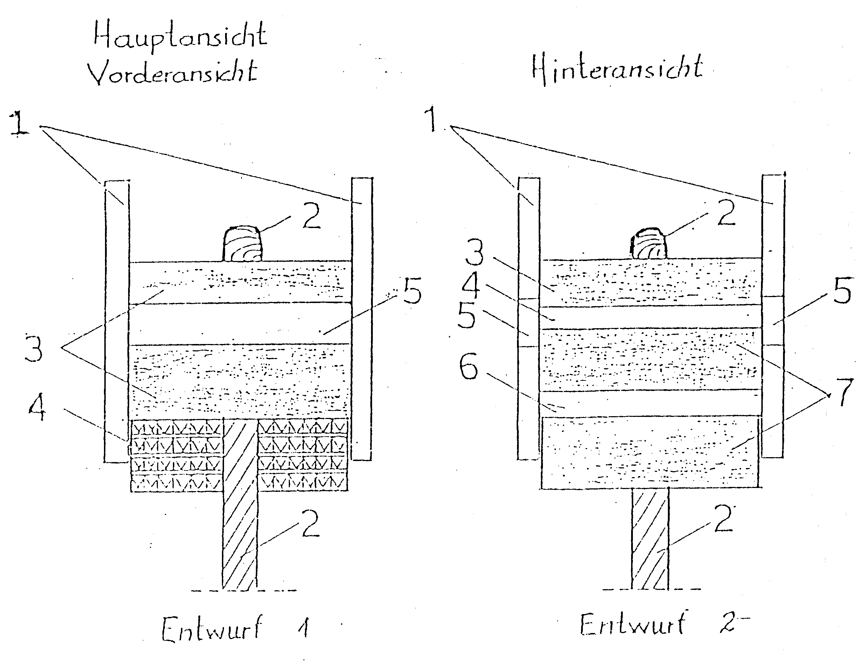

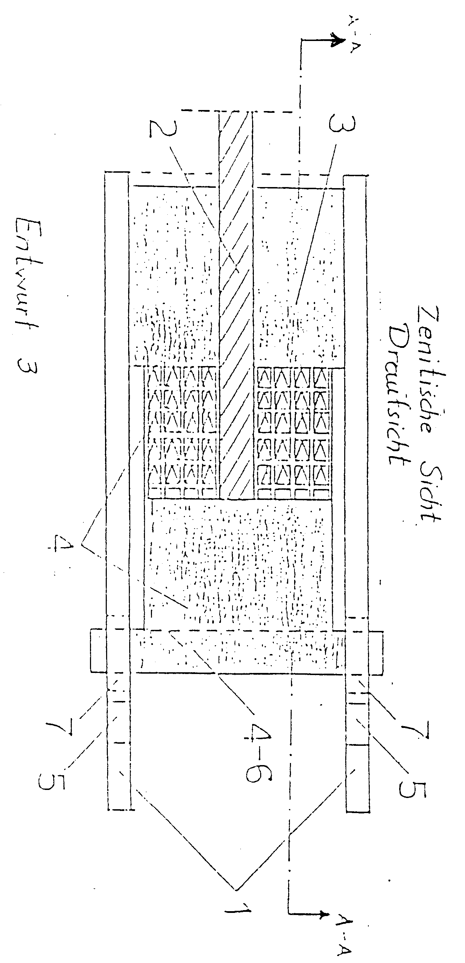

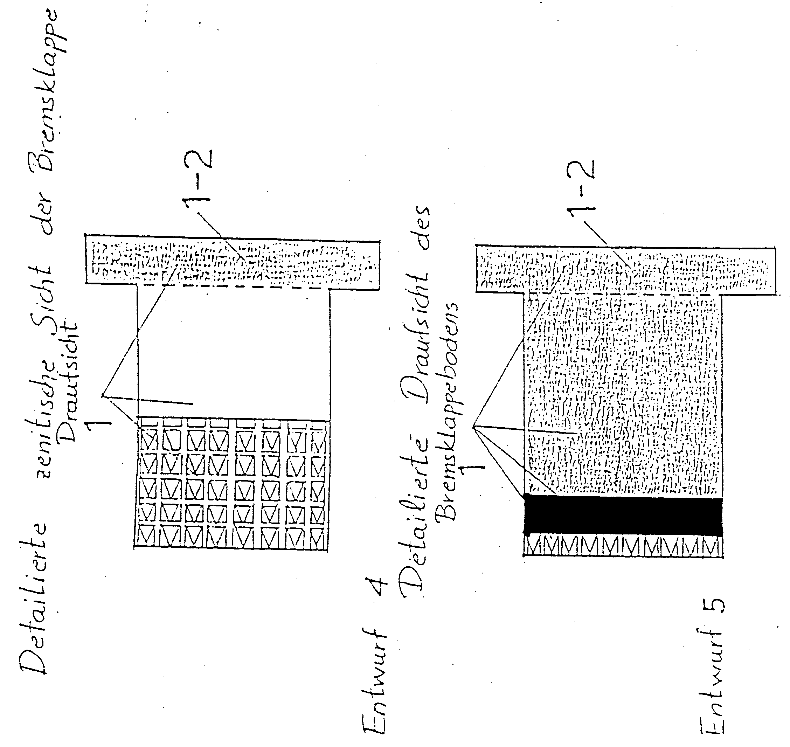

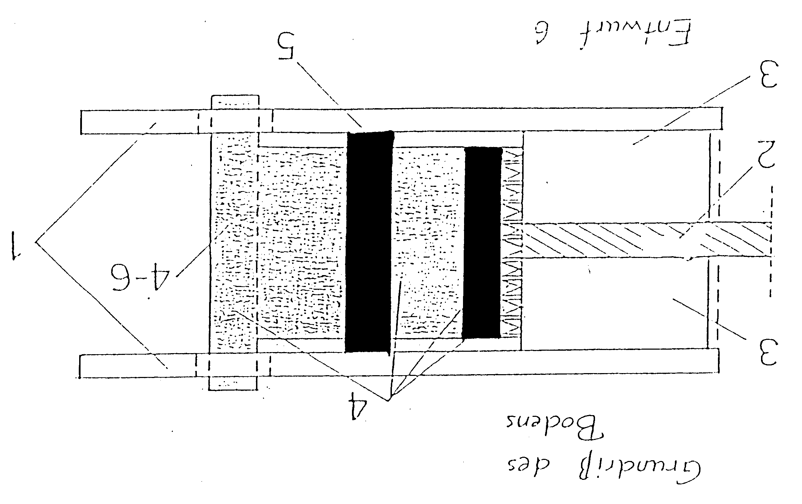

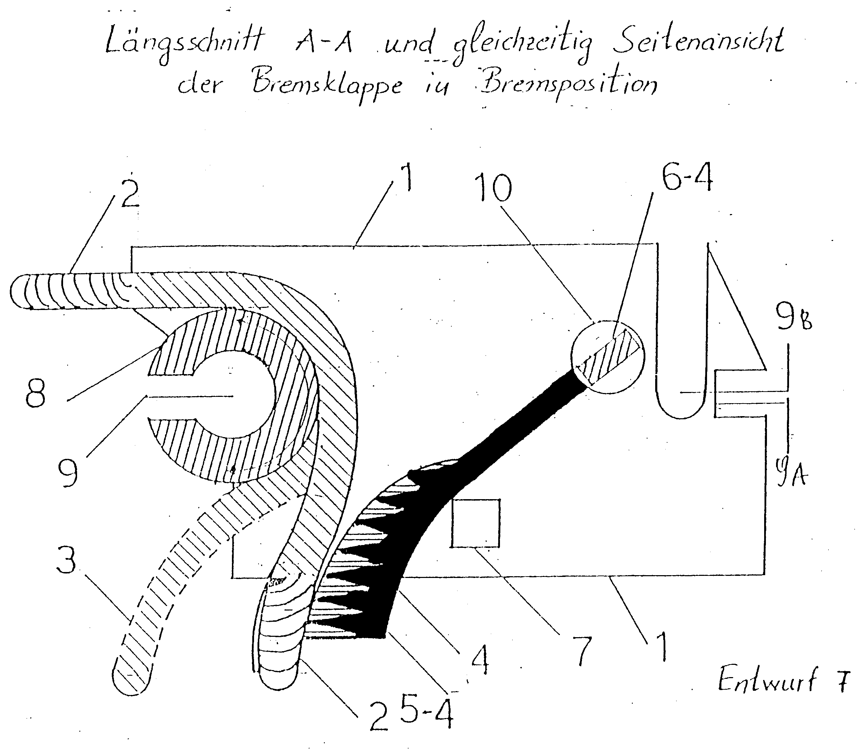

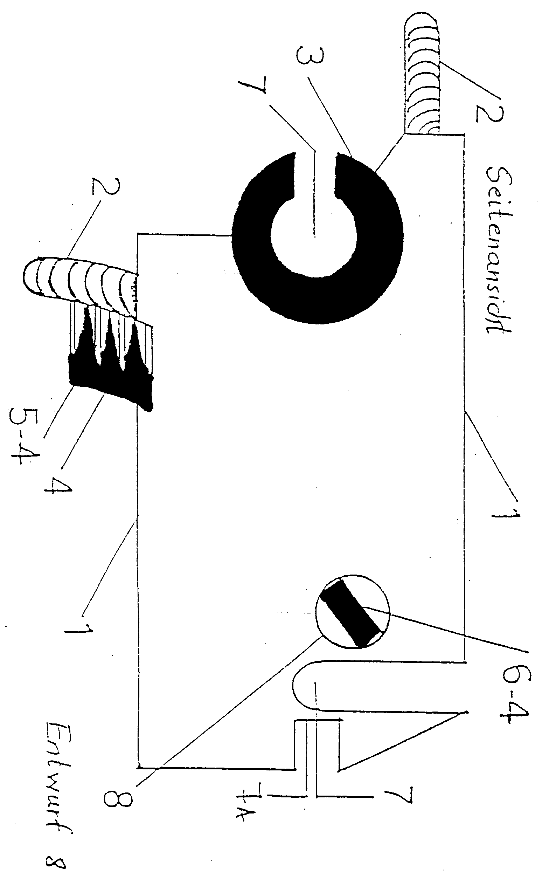

## Patentansprüche

1. Vorrichtung zur Abbremsung und Befreiung der Seile oder Schnuere oder Riemen mit dem Zweck das Hinauf- und Herabziehen von Lasten. Die besteht aus einem Gehaeuse mit eingebautem Drehpunkt und einer Bremsklappe. Die Bremsklappe ist gebogen und hat einen eingebauten oder zusaetzlichen Befestigungsstift, um den sie sich dreht. Sie kann in Bezug auf den Drehpunkt konkav oder konvex sein, oder einen spitzen oder stumpfen Winkel bilden, oder sie kann gerade sein, indem sie ihren Zackenbereich in eine oder mehrere horizontale oder vertikale Reihen erweitert. Die Zacken koennen eine rhombische oder andere geometrische Form haben und koennen symmetrisch in Reihen oder versetzt liegen. Das Teil mit den Zacken kann auch nachtraeglich eingebaut werden.

2. Eine Bremsvorrichtung, wie bei Nr.1 erwaehnt wird, die einen eingebauten Drehpunkt (Nr.8 bei Entwurf Nr.7) hat, der fest oder beweglich oder rotierend sein kann, zylindrischer oder anderer geometrischen Form, der Zacken oder Rillen oder Ueberzug haben kann.

3. Eine Bremsvorrichtung wie bei 1. und 2. erwaehnt wird, die auf der Befestigungsunterlage nur mit einem leichtn Einrasten befestigt wird, ohne daß Schrauben oder Stifte benoetigt werden, da die Unterlage eine Oeffnung hat, die die Breite der Vorrichtung hat, und Laenge gleuch der Distanz zwischen den zwei Vertiefungen des Gehauses der Vorrichtung (9-9A bei Entwurf Nr.7).

EP 0 508 932 A1

Hauptansicht
Vorderansicht

Hinteransicht

1

2

3

5

4

2

Entwurf 1

1

3
4
5

6

2

5

7

2

Entwurf 2-

EP 0 508 932 A1

Zenitische Sicht
Draufsicht

A-A

3

2

7   5

4-6

1

A-A

4

7   5

Entwurf 3

Detailierte zenitische Sicht der Bremsklappe
Draufsicht

1

1-2

Entwurf 4

Detailierte Draufsicht des Bremsklappebodens

1

1-2

Entwurf 5

Grundriß des
Bodens

Entwurf 6

Längsschnitt A-A und gleichzeitig Seitenansicht der Bremsklappe in Bremsposition

Entwurf 7

EP 0 508 932 A1

Seitenansicht

Entwurf 8

Europäisches
Patentamt

**EUROPÄISCHER RECHERCHENBERICHT**

Nummer der Anmeldung

EP 92 60 0002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-2 226 937 (MASSET) * Seite 1, rechte Spalte, Zeilen 12-37; Seite 2, linke Spalte, Zeilen 14-49; Figur 1 * | 1 | B 66 D 3/10 B 66 D 5/16 F 16 G 11/10 |
| A | | 2 | |
| Y | FR-A- 692 999 (ROIRON) * Seite 1, Zeilen 36-51; Seite 1, Zeile 62 - Seite 2, Zeile 14; Figur 1 * | 1 | |
| Y | DE-B-1 153 145 (HALFORD) * Spalte 4, Zeilen 1-35; Spalte 5, Zeilen 20-46; Figuren 2,3 * | 1,2 | |
| Y | US-A-2 532 893 (CROTTY) * Spalte 2, Zeilen 4-26; Figur 1 * | 1,2 | |
| Y | US-A-1 961 081 (SCHRADER) * Figuren 1,4; Seite 1, Zeilen 45-52,63-74 * | 1 | |
| A | | 2 | **RECHERCHIERTE SACHGEBIETE (Int. Cl.5)** |
| Y | FR-A- 716 709 (COMPTE) * Seite 1, Zeile 48 - Seite 2, Zeile 15; Figuren 3,4 * | 1 | B 66 C B 66 D A 62 B F 16 G B 63 B F 16 B |
| A | | 2 | |
| A | US-A-3 091 207 (SONGER) * Spalte 2, Zeile 52 - Spalte 3, Zeile 9; Spalte 3, Zeilen 32-49; Figuren 1,3 * | 1 | |

-/-

Der vorliegende Recherchenbericht wurde für alle Patentansprüche erstellt

| Recherchenort | Abschlußdatum der Recherche | Prüfer |
|---|---|---|
| DEN HAAG | 22-06-1992 | GUTHMULLER J.A.H. |

EPO FORM 1503 03.82 (P0403)

**Europäisches Patentamt**

# EUROPÄISCHER RECHERCHENBERICHT

Nummer der Anmeldung

EP  92 60 0002

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | CH-A-  213 737  (WALTHER) <br> * Seite 1, Zeile 41 - Seite 2, Zeile 6; Seite 2, Zeilen 18-33; Figuren * <br> --- | 1 | |
| A | FR-A-  688 773  (DUSSAUZE) <br> * Seite 1, Zeilen 1-9,46-54; Seite 2, Zeilen 1-32; Figuren 2,3 * <br> --- | 1,2 | |
| A | DE-C-   1 231  (KESSELER et al.) <br> * Figuren * <br> ----- | 1 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 22-06-1992 | GUTHMULLER J.A.H. |

EPO FORM 1503 03.82 (P0403)